(19) **Europäisches Patentamt / European Patent Office / Office européen des brevets**

(11) **EP 4 685 174 A1**

(12) **EUROPEAN PATENT APPLICATION**
published in accordance with Art. 153(4) EPC

(43) Date of publication:
**28.01.2026 Bulletin 2026/05**

(21) Application number: **24773703.4**

(22) Date of filing: **23.03.2024**

(51) International Patent Classification (IPC):
**C08J 5/00** (2006.01)   **B32B 18/00** (2006.01)
**C23C 26/00** (2006.01)   **H01L 21/00** (2006.01)

(52) Cooperative Patent Classification (CPC):
**B32B 18/00; C08J 5/00; C23C 26/00; H01L 21/00**

(86) International application number:
**PCT/BR2024/050111**

(87) International publication number:
**WO 2024/192494 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 BR 102023005372**

(71) Applicant: **Centro Nacional de Pesquisa em Energia e Materiais**
**13083-100 Campinas - SP (BR)**

(72) Inventors:
- **DE SOUZA, Flavio Leandro**
  **13083100 Campinas (BR)**
- **BEDIN, Karen Cristina**
  **13083100 Campinas (BR)**

(74) Representative: **Studio Torta S.p.A.**
**Via Viotti, 9**
**10121 Torino (IT)**

(54) **PROCESS FOR PRODUCING OXIDE COMPOSITIONS FROM POLYMERIC SOLUTIONS CONTAINING ONE OR MORE CATIONS, OXIDE COMPOSITION AND PROCESS FOR THIN FILM DEPOSITION ON SUBSTRATES**

(57) The invention relates to new processes for producing oxide compositions from polymeric solutions containing one or more cations, which are particularly useful for use as thin films for deposition on substrates and which make it possible both to solve problems linked to the formation of undesirable phases together with the oxide of interest, and to manipulate the physicochemical and morphological properties of the film while maintaining high adherence to the substrate. The invention pertains to the technical fields of materials chemistry, conductive devices, electrodes, electronic devices, optoelectronic devices, devices for photo(electro)catalysis, substrate coating and surface treatment.

EP 4 685 174 A1

**Description**

TECHNICAL FIELD OF THE INVENTION

The present invention describes new processes for producing oxides from polymeric solutions containing one or more cations, particularly useful for the manufacture of thin films. The invention is in the technical fields of materials chemistry, conductive devices, electrodes, electronic devices, optoelectronic devices, devices for photo(electro)catalysis, substrate coating and surface treatment.

BACKGROUND OF THE INVENTION

In recent decades, the search for efficient and stable photoelectrodes for the clean generation of hydrogen from the splitting of the water molecule, aiming at the necessary and urgent transition to a low-carbon society, has been a great challenge for scientists and engineers. Furthermore, the development of cost-effective, large-scale manufacturing techniques to produce such components safely and reproducibly adds to the arduous challenge.

Among the various methods based on parameterizable and scalable solution chemistry that are low-cost, those derived from the Pechini process stand out in academic research as well as in industrial processes. The benefits of this methodology include ease of execution and reproduction, simple experimental apparatus, excellent stoichiometric control, and versatile design of materials in various forms, such as powders, thin films, and polymers. Regardless of these advantages, scaling from the laboratory to industry and fabricating large-area thin film electrodes for a wide range of optoelectronic applications remains a challenge.

Of particular interest is the large-scale fabrication of electrodes for photovoltaic and photoelectrochemical (PEC) applications, such as solar cells for water splitting, in which a transparent conductive substrate, such as a commercial fluorine-doped tin oxide (FTO) coated glass substrate, is commonly used in most academic studies. FTOs have an irregular surface roughness, on which precursor solutions are deposited using spin- or dip-coating techniques, followed by a heat treatment step, which eliminates volatile species and promotes the formation of the inorganic phase in a specific morphology and desired crystalline phase. Therefore, the conformational characteristic on the irregular FTO surface is often lost after heat treatment, resulting in poor thin film adhesion and significant crystal lattice deformations, which affect the transport of photogenerated electrons/holes and therefore reduce the overall electrode performance. The release of mechanical stress during heat treatment is directly related to the physical and chemical incompatibilities of the interface between the FTO and the photoactive thin film, and is primarily responsible for the creation of a "dead layer" at this interface. Furthermore, film surface cracks, pinholes, and voids severely impair the performance of optoelectronics and the long-term stability of photoelectrodes.

An additional problem associated with the release of voltage in a photocatalyst with mesoporous morphology is the increase in electron loss due to uncovered areas that cause the FTO to be exposed to the electrolyte during the application of the thin film, causing a deviation from the original path of electrons from the photocatalyst to the FTO and external circuit, a process known as shunting. Although thin films prepared from the polymeric precursor solution are more susceptible to stress at the substrate/semiconductor interface, favoring the creation of a shunting recombination pathway, this undesirable aspect is commonly reported for mesoporous morphology regardless of the fabrication process. Several methods dedicated to mitigating shunting recombination in mesoporous thin films, which occurs during thin film fabrication, have been reported in the literature in an attempt to improve photoelectrode performance. Among these methods, the deposition of a thin oxide layer (< 15 nm) on the FTO before the growth of the desired photoactive layer is the most common strategy. Indeed, overcoming the problem of shunting recombination without compromising the thin film morphology and/or the improvements achieved by the modifications is not an easy task.

Recently, Hamann (P. Shadabipour, TW Hamann, Chem. Commun., 2020, 56, 2570-2573) proposed the electrodeposition of an insulating poly(phenylene oxide, PPO) layer on the FTO substrate prior to photocatalyst deposition. Cyclic voltammetry data showed that, indeed, the PPO layer can be employed to reduce *shunting* recombination at the photocatalyst-FTO interface and improve the performance of the hematite photoanode depending on the morphology. Considering that the feasibility of manufacturing mesoporous morphology, heat treatment and "green" principles are necessary for industrial scale and cost minimization, manufacturing methods that use fewer manufacturing steps are preferable.

It has long been observed experimentally that the performance of photocatalysts diverges substantially from their theoretical reference efficiency. Although several advanced characterization tools such as *in* situ/operando techniques have been developed to probe interfacial issues, there remains a lack of studies on critical steps in thin film design and interface control, especially for photocatalyst-substrate interfaces.

Thus, the study of modifications of the precursor solutions to design a FTO-photocatalyst interface (back-contact) becomes of fundamental importance, mainly to improve the overall efficiency, reducing a series of known critical problems, such as short circuit in this interface/competitive reactions with the electrolyte, losses due to recombination of photogenerated charge carriers and high energy barrier, long-term mechanical stability of thin film (i.e., avoid peeling due to electrolyte infiltration into voids), optimization of thin film density, among others.

In a search of the state of the art published to date, the following documents were found:

US3330697 discloses a process for preparing complex oxides (zirconates, niobates, titanates) in the form of powder, film and coating, containing at least one acidic metal (Zr, Nb, Ti) and one basic metal (Pb or alkaline earth metal). However, this methodology uses several parameters considered inadequate, such as heating the solution to a temperature above 100 °C (which leads to the formation of bubbles).

CN100515953 discloses a process for preparing a zinc oxide thin film and adopts the water-based Pechini method to prepare ZnO thin films. However, this process requires a long preparation time (at least 3 days) and describes a method only for simple oxide films. Heating the solution for 2 hours in a water bath at 80 °C after adding ethanol may volatilize it. Environmental conditions (temperature and humidity) interfere in this process and thus, there is no control over reproducibility.

US3438723 discloses a process for preparing ferrite compositions, which form a resin. However, this process is restricted to the preparation of complex oxides in powder form and uses stoichiometric component proportions. When removing excess solvent, it forms a resin that is subsequently calcined to obtain ferrite.

BR102019025561 discloses a composition for ceramic thin films and a process for their preparation. However, the method is written only for the preparation of complex oxides in the form of films, which cannot achieve uniform covering of the substrate. Furthermore, it requires the addition of a surfactant (Pluronic P123) at a ratio of 5-50 mg for each mL of precursor resin, under heating, with subsequent adjustment of the viscosity. Resting is necessary to remove bubbles formed after adjusting the viscosity. The visual aspect of the films is extremely negative for industrial applications, and there are limitations in obtaining oxide films containing more than 3 metals due to phase separation.

DE19546483 discloses a method of coating substrates with a high-temperature superconducting ceramic layer using the Pechini method. However, the use of oxide as a precursor to the element of interest requires the addition of concentrated nitric acid and heating of the solution in a paraffin bath. The process uses a concentration of volatile elements 1 to 50 times higher than that found in the structure of the oxide superconductor. To form the gel, heating the solution from 110 °C to 150 °C is recommended. Covering is done 1 to 10 times, with the substrate inside an alumina crucible, to which the still liquid gel is added (between 110-140 °C), with subsequent heat treatment in an oxidizing or inert atmosphere for minutes to hours (1, 20, 200 h). Continuous covering is not obtained by dip coating.

US4994433 discloses a process for preparing superconducting oxide thin films. However, it uses high temperatures (100-200 °C) for resin formation and deposition on the substrate, as well as multiple depositions, forming films that have low adhesion to the substrate after drying, including intentionally detaching the film from the substrate, in addition to being detected cracks and unfilled spaces between the grains.

KR102460587 discloses a process for manufacturing lead chromate thin film by solution synthesis. However, the present method uses a drop-casting method, which limits reproducibility, and requires a long heat treatment period. The oxide of interest $PbCrO_4$ is obtained as the majority phase, with the existence of a second phase.

Thus, from what can be inferred from the literature researched, no documents were found anticipating or suggesting the teachings of the present invention.

SUMMARY OF THE INVENTION

In this context, the present patent application presents a new methodology for producing oxides from polymeric solutions containing one or more cations, which allows solving both problems linked to the formation of undesirable phases together with the oxide of interest, and manipulating the physicochemical and morphological properties of the film, maintaining high adhesion to the substrate.

In addition, the new morphology developed allows a more efficient parameterization of the substrate-photocatalyst interface, which leads not only to the minimization of electron losses by recombination commonly observed at grain boundaries in mesoporous electrodes, but also to a better thin film density for optimization of light absorption. The optimized substrate-photocatalyst interface also avoids the existence of voids that commonly lead to failure in thin film stability, as well as competitive (photo)electrochemical reactions and short circuiting between the substrate and the electrolyte and without the presence of an additional protective layer.

Another advantage is that the present process allows control of crystal size and film thickness, reducing both in relation to the pure oxide film. Furthermore, only by increasing the concentration of the modifier is it possible to increase the thickness of the films, not depending on multiple depositions. The process allows the formation of films with simple, doped or complex oxide (2 or more cations).

Surprisingly, in the process of the present invention, it is possible to achieve films with distinct properties, depending on whether or not a modifier is added and in which step(s) such modifier is added. If the dopant is added in both steps specified in the process, one performed only in phase 2 is obtained, and the property achieved in this case is synergistic in relation to the addition of it exclusively in one or the other phase. It is important to mention that the method allows the selective addition of any element from the periodic table in different locations (within the crystal structure of the core material or on the crystal surface), choosing in which phase 1 or 2 it is incorporated. In this context, the decision of the desired final property becomes relevant so that the best concentration and the best element(s) to be incorporated can be investigated.

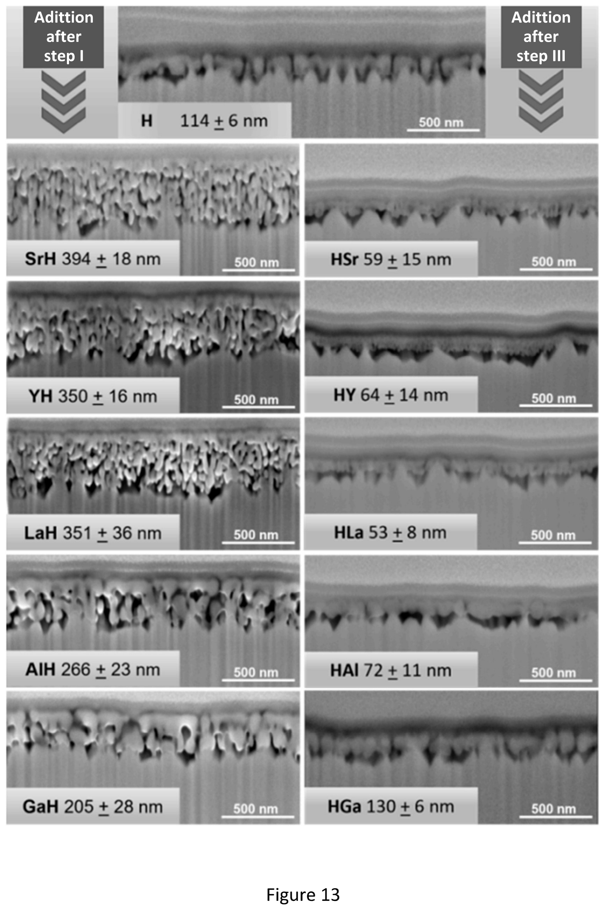

It is equally surprising that the morphology of the film formed with the addition of modifier after step I is reproducible regardless of the added metal. The same occurs when the addition happens after step III of the process of the present invention. An equally surprising example of the effect of the element added in different steps can be observed by analyzing the evolution/change in the morphology of the nanostructured film with the addition of modifier after step I versus the addition of modifier after step III, as can be seen in Figure 13 of this description.

BRIEF DESCRIPTION OF THE DRAWINGS

In order to better define and clarify the content of this patent application, the following figures are presented:

Figure 1: Schematic representation of the preparation of the polymeric precursor solution and production of thin films.

Figure 1.1: SEM images of scanning electron microscopy obtained for (a) FTO, (b) pure hematite (Pure-H), (c) hematite modified with 1% Zr (ZrH1%), (d) 2% Zr (ZrH2%), (e) 3% Zr (ZrH3%) and for (f) FeNi photo-electrodeposited on ZrH3% (ZrH3%/FeNi).

Figure 1.2: AFM images obtained for FTO, pure hematite (Pure-H (H), hematite modified with 1% Zr (ZrH1%), 2% Zr (ZrH2%), 3% Zr (ZrH3%) and for FeNi photo-electrodeposited on ZrH3% (ZrH3%/FeNi).

Figure 2: STEM images of hematite prepared from precursor polymeric solution with single solvent (a) and with blend of solvents (b) and $Zr^{4+}$ addition layers. Bottom: Magnified regions represented by red squares highlighting the contrast of poor and rich regions in contact between the photocatalyst thin film and commercial FTO glass substrate.

Figure 3: Schematic representation of the different molecular configurations leading to a better contact interface between the FTO and the photocatalyst during heat treatment. More suitable molecular packing together with the segregation of $Zr^{4+}$ on the hematite surface is providing a more suitable environment for the growth of a rich contact interface between the photocatalyst and substrate.

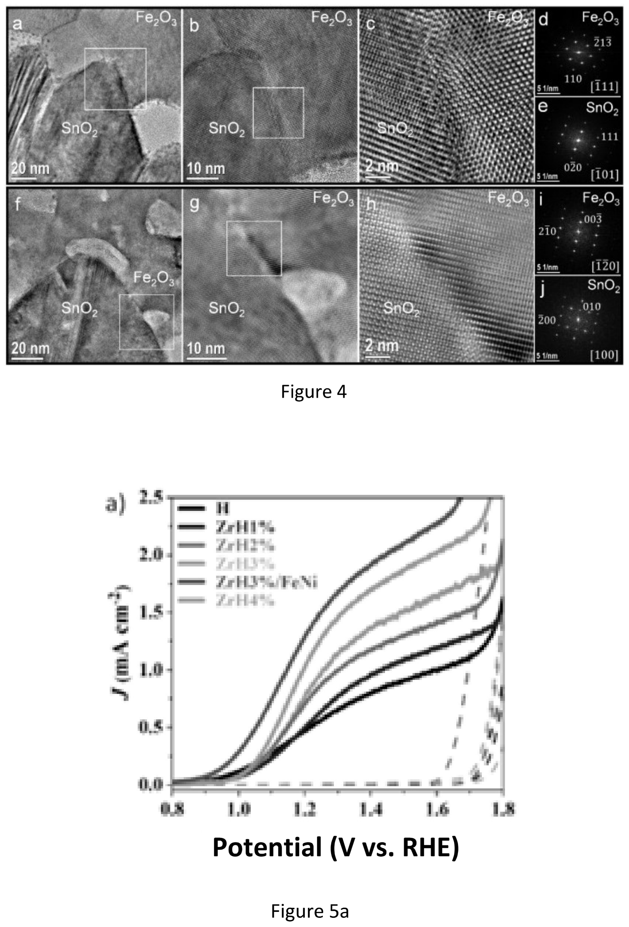

Figure 4: TEM images of Pure-H/FTO interface showing (a) low magnification image and HRTEM images at two different magnifications for (b) the tip of the FTO/hematite interface (white box in image "a") and (c) filtered HRTEM of the lateral FTO($SnO_2$)/hematite interface (white box in image (b); (e, f) Fast Fourier Transform (FFT) images of hematite and FTO ($SnO_2$) in image "c" indexed with the crystallographic planes in green and red dots along with the zone axis in the lower right corner of the images. TEM images of the FTO/ZrH3% (Zr-bearing hematite) interface showing (f) low magnification image and HRTEM images at two magnifications for (g) the lateral interface and (h) filtered HRTEM of the FTO/ZrH3% lateral interface (white box in image "h"), (i,j) FFT images of the hematite ($\alpha$-$Fe_2O_3$) and FTO ($SnO_2$) regions in image "h".

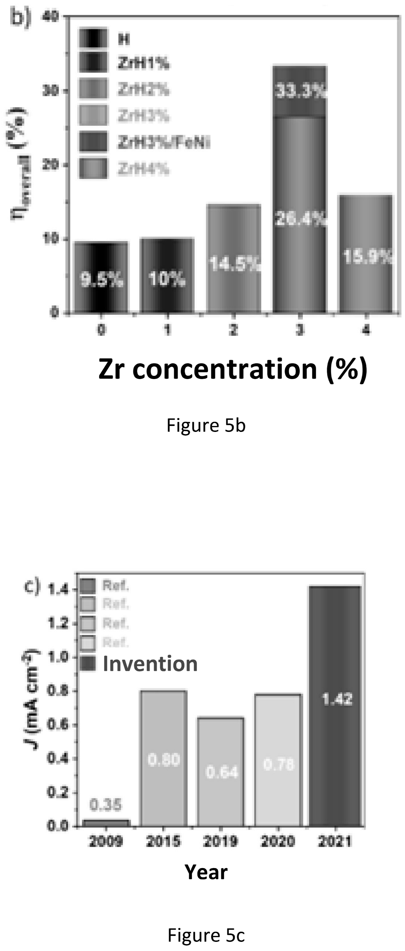

Figure 5: (a) Linear scanning voltammograms of pure hematite, ZrH1%, ZrH2%, ZrH3%, and ZrH4% measured in 1.0 mol/L NaOH at a scan rate of 10 mV s$^{-1}$. The solid lines represent the response under AM 1.5G illumination (100 mW cm$^{-2}$) and the dashed lines under dark conditions, and (b) Overall efficiency ($\eta_{overall}$) obtained for the $J_{ph}/J_{abs}$ ratio for all prepared thin films, (c) Photocurrent densities extracted at 1.23 V (RHE) from the literature using the same chemical procedure method and similar morphology of planar thin film showing a $Si^{4+}$-doped layer (black line), $Cu^{2+}$-doped layer (blue line), multiple layers of pure hematite (green line), $Sn^{4+}$-doped layer/FeNi (orange line) and the ZrH3%/FeNi (red line). The reported photocurrent densities were measured in 1.0 mol/L NaOH aqueous solution at pH = 13.6.

Figure 6: (a) EIS spectra for Pure-H (black line) and ZrH3%/FeNi (red line) measured at 1.23 V vs. RHE under illuminated conditions; the dashed lines represent the fitting curves obtained from the equivalent circuit inserted in a. (b) Mott-Schottky plots recorded at 1 kHz under dark conditions for Pure-H and ZrH3%/FeNi. Solid lines represent the linear fit to the selected experimental data. The experiment was measured in 1.0 mol/L NaOH solution at pH = 13.6.

Figure 7: Cross-sectional SEM images for FTO (a), pure hematite (Pure-H) (b), ZrH3% (c), ZrH3%/FeNi (d) and their corresponding AFM topographic images (e).

Figure 8: STEM images and chemical mapping images obtained from EDS for the ZrH3%/FeNi thin film. The area marked with a yellow box was used for drift correction and the green box is the mapping region.

Figure 9: STEM image and STEM/EELS energy shift mapping ($\Delta$eV) for $L_3$-edge of Fe in the green rectangular box. Variations in the oxidation state and chemical environment of iron are displayed by the $\Delta$eV color map where differences from the brown color ($\Delta$eV equal to 0) represent differences from the standard $L_3$-edge peak position for iron in hematite. The yellow square box was used for drift correction in STEM/EELS mapping.

Figure 10: Linear scanning voltammograms of Pure-H, ZrH3%, and ZrH3%/FeNi measured in 1.0 mol/L NaOH + 5% $H_2O_2$ for ZrH3%/FeNi at a scan rate of 10 mV s$^{-1}$. The solid lines represent the response under AM 1.5G illumination (100 mW cm$^{-2}$) and the dashed lines in the dark.

Figure 11: Cyclic voltammetry of the ZrH3%/FeNi photoanode up to 200 scans from 0.6 to 1.8 V vs. RHE under simulated light conditions (scanning for higher potential values and scan rate of 50 mV/s) with light intensity calibrated at 100 mW; (b) Chronoamperometry curve of ZrH3%/FeNi at 1.23 V vs. RHE.

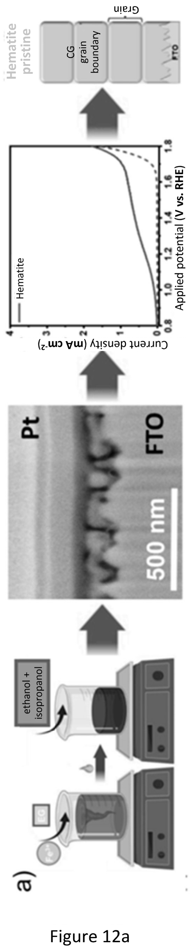

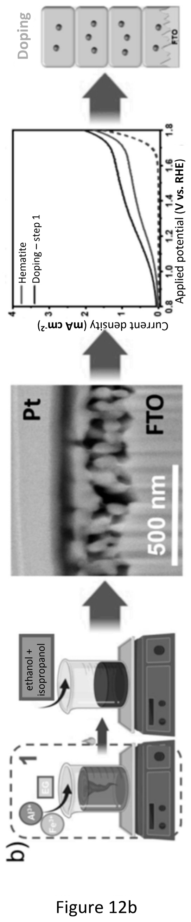

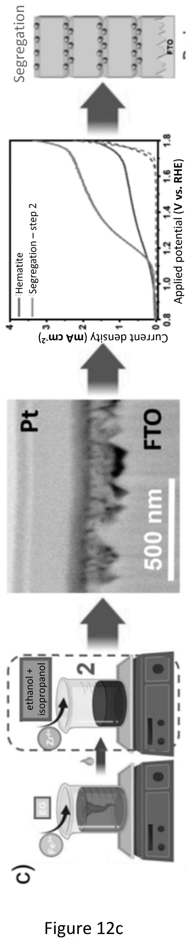

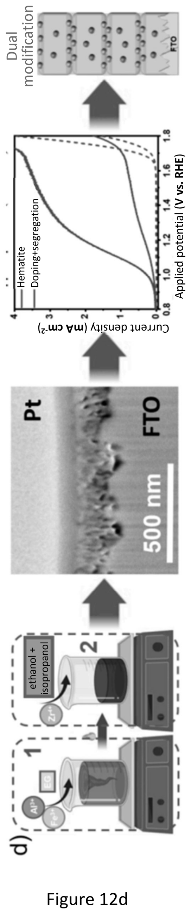

Figure 12: Photograph of the morphologies of films obtained with the addition of (a) no modifier, (b) modifier after step I, (c) modifier after step III, (d) modifier after steps I and III. On the right of the photographs, the response of the current density (mA cm-2) versus the potential applied to each type of film, indicating the positive synergistic effect between (b) and (c) obtained in film (d).

Figure 13: Photograph of the morphologies of films manufactured with Sr, Y, La, Al, and Ga modifiers after step I (left) and after step III (right), showing their constancies. H: hematite.

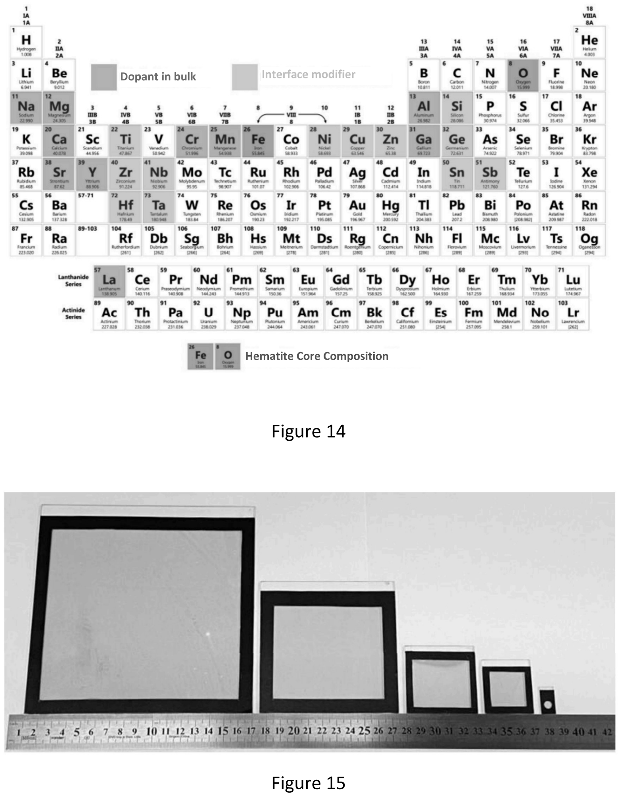

Figure 14: Elements tested in the process of the present invention for the case study chosen to exemplify the potential of the chemical process, and also to illustrate selective control.

Figure 15: Photograph of films manufactured by the process of the present invention deposited on substrates of different dimensions, demonstrating their scalability.

## DETAILED DESCRIPTION OF THE INVENTION

This detailed description of the invention establishes some nonlimiting definitions of the main terminologies and technical characteristics used throughout this patent application, as well as providing examples of some of the embodiments of the present invention so that it can be reproduced by a person skilled in the art.

The present invention discloses a process for producing an oxide composition from a polymeric solution containing one or more cations, which comprises the following steps:

I. dissolving a precursor of at least one metal cation of the oxide of interest and $\alpha$-hydroxycarboxylic acid in water, in a preferential molar ratio of 1:3 (metal/a-hydroxycarboxylic acid);
II. adding polyhydroxy alcohol under stirring and temperature between 60 °C and 70 °C and time between 20 min and 40 min, in a preferential percentage ratio of 40:60 (polyhydroxy alcohol/$\alpha$-hydroxycarboxylic acid);
III. concentrating the formed composition;
IV. diluting with at least two alcohols in a proportion between 4:1 and 2:3;
V. cooling the composition at a temperature between 0 °C and 15 °C for at least 12 h.

In one embodiment of the present invention, the $\alpha$-hydroxycarboxylic acid may be selected from the group of short to medium chain di- and polycarboxylic acids, preferably citric acid.

In one embodiment of the present invention, the metallic precursor of the oxide can be selected from the group of nitrates, sulfates, acetates, among others that can be homogeneously solubilized. In this embodiment, a cation is added to prepare a simple oxide.

In one embodiment of the present invention, the polyhydroxy alcohol is selected from a liquid alcohol below 70 °C and ideally of short chain, preferably being ethylene glycol.

In one embodiment of the present invention, the entire solution or only an aliquot from the total volume of the solution obtained in step "II" can be concentrated. In an additional embodiment, the concentration is carried out by solvent evaporation, which gradually increases the viscosity of the solution and which, due to the fact that the process is gradual, can be adapted in order to make the solution more or less concentrated according to the final objective of obtaining thin or thicker films for, *e.g.,* a single deposition.

In one embodiment of the present invention, prior to the concentration step, the total volume is measured to determine the concentration of the metal cation, followed by concentration of the solution at 60-70 °C to approximately half the volume.

In one embodiment of the present invention, dilution can be done with a blend of alcohols selected from the group of alcohols with low volatilization temperature and with thermodynamically compatible properties for dissolving the polymeric matrix, preferably being a blend of ethanol and isopropyl alcohol, in the proportion of 3:2. The change of solvent with the addition of alcohols in step "V" increases wettability and electrostatic interactions during the covering of the substrate with the precursor polymeric solution, enabling the use of substrates with different roughnesses.

The cooling step "VI" promotes the accommodation of the polymeric chains in the precursor polymeric solution, reducing intermolecular voids and improving packaging. This promotes the stabilization of the polymer and the viscosity of the solution, ensuring the reproducibility of the films subsequently manufactured. In one embodiment of the present invention, the precursor polymeric solution can be subjected to 24 h at 7 °C.

One embodiment of the present invention may comprise, after step I, more than one cation being added to form a complex oxide or doped oxide.

One embodiment of the present invention may comprise after step III the incorporation of one or more modifying elements. Such components do not need to be added in stoichiometric proportions, thus forming a nanostructured oxide without the formation of a second phase containing the modifier. The thickness and grain size of the final composition formed (oxide film) can be controlled by the concentration of the modifier added at this step. The modifying element can be selected from the different groups of the periodic table: alkali metals, alkaline earth metals, transition and post-transition elements, provided that conditions are maintained to prevent precipitation after incorporation into the concentrated solution.

In one embodiment, the at least one modifying element is added from a solution, preferably aqueous or ethanolic.

Inorganic reagents such as nitrates and chlorides, or organic reagents such as ethoxide, butoxide and isopropoxide can be used as the modifier precursor. Modifiers that can be added at this step segregate into the oxide grain boundaries during heat treatment. When applying films to photoelectron catalysis, they reduce the energy barrier for the transport of photogenerated charges and minimize the recombination of electron-hole pairs at the interface between the grains.

The combination of the dilution step with the addition of at least one modifying element also allows manipulating the physical-chemical properties of the surface/interfaces of the grains of the oxide composition formed at the end of the process, as well as its morphology, by means of the segregation of the modifiers that were added, without altering the crystalline arrangement of the oxide. As a result, there is better densification, surface uniformity and better adhesion of the film to the substrate, promoting improved efficiency of charge collection at the interface between the oxide film and the substrate during application. In addition, long-term mechanical stability is ensured (i.e., peel-off due to electrolyte infiltration into empty spaces is avoided). Thus, there is an improvement in overall efficiency, aiming at the scalability and low cost of photoelectrochemical (PEC) devices for breaking down the water molecule.

One of the objects of the present invention is a polymeric composition of oxides, produced by a process as defined in the previous paragraphs.

One of the objects of the present invention is a process for deposition of a thin film on a conductive layer substrate that comprises the following steps:

- deposition of oxide composition from polymeric solution containing one or more cations, as defined in the previous paragraphs, on clean and treated substrates;
- drying and heat treatment.

In one embodiment of the present invention, the deposition of the thin film can be performed by dip coating, spin coating and/or spray coating techniques.

In one embodiment of the present invention, the substrate can be chosen according to the application, and can be common glass, stainless steel, silicon wafers, among others, and not restricted to planar surfaces. For the photoelectrochemical application demonstrated in the examples, the conductive substrate is preferably alumino borosilicate glass coated with a conductive layer of fluorine-doped tin oxide (FTO).

In one embodiment of the present invention, the heat treatment occurs for a period of between 20 - 40 min in air at a temperature between 500 °C and 600 °C, followed by an additional 10 - 30 min in an inert atmosphere at a temperature between 700 °C and 800 °C. In another embodiment of the present invention, the heat treatment occurs for a period of 30 min in air and at a temperature between 500 °C and 600 °C. Such heat treatment allows the elimination of the organic polymeric matrix and formation of the oxide. According to the thermodynamics of oxide formation in the phase of interest, the time and temperature of the heat treatment can be adjusted, as well as the gaseous atmosphere, paying attention to the integrity of the substrate at high temperatures. For the photoelectrochemical application demonstrated here, a second treatment at 750 °C in $N_2$ for a period of 10 to 30 minutes can be performed and promotes the activation of the oxide film and segregation of the modifier.

## EXAMPLES

EXAMPLE OF PREPARATION OF ZR-HEMATITE THIN FILMS

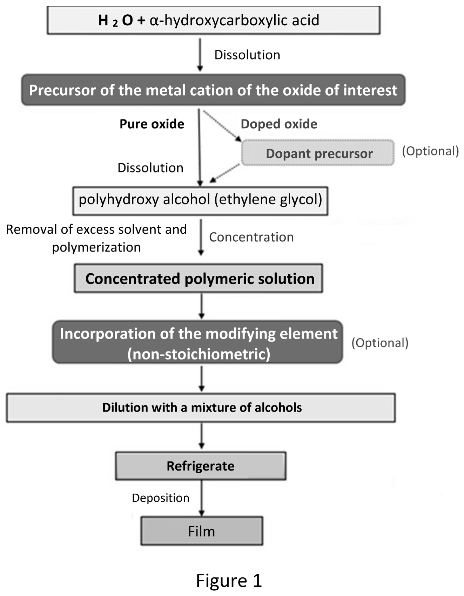

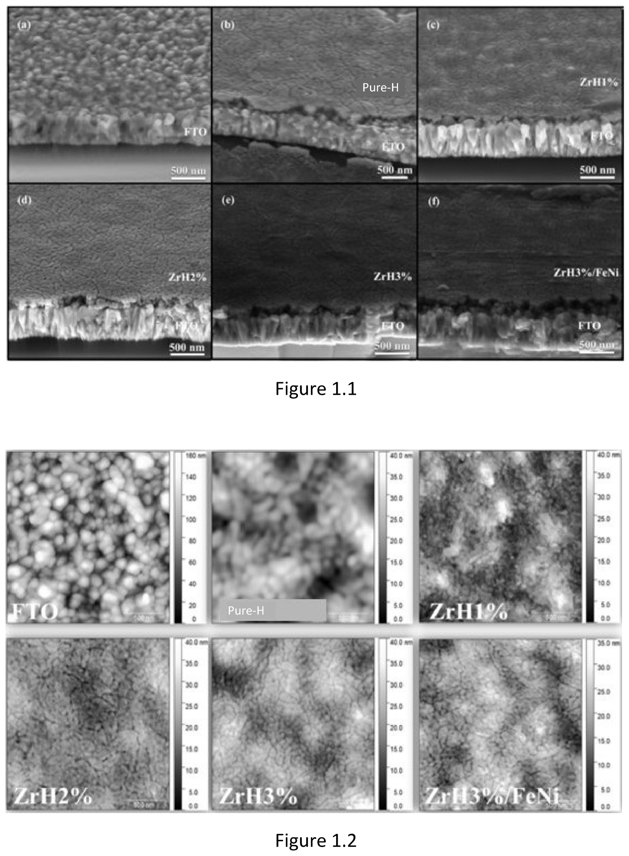

7.00 g of Iron Nitrate(III) ($Fe(NO_3)_3$ 9 $H_2O$, Alfa Aesar, 99.5%) and 10.00 g of citric acid ($C_6H_8O_7$, J.T. Baker, 99.5%) were dissolved in 20 g of milliQ water (18.2 MΩ cm, 25 °C). The system was then heated between 60-70 °C and kept under stirring throughout the process. After complete homogenization, 6.70 g of ethylene glycol (Sigma Aldrich, 99.8%) were added to this solution, stirred again and heated at 70 °C for 30 min. At this step, the ferric ions are chelated by citric acid and the polyesterification reaction promoted by ethylene glycol occurs. After that, the precursor solution was allowed to cool naturally to 25 °C. A 10.0 mL aliquot was concentrated at 70 °C by reducing 50% of its initial volume (to 5.0 mL), as illustrated in Fig. 1. At this point, an aliquot of the stock solution of 0.14 mol/L $ZrO(NO_3)_2$ $2H_2O$ (Alfa-Aesar, 99.9%) in water-ethanol (50:50, *v:v*) was added to the concentrated polymeric solution to obtain the Zr-modified hematite precursor solutions, which were stirred for 5 min. Aliquots of the $Zr^{4+}$ stock solution were used to obtain the precursor solution with 1%, 2%, 3%, and 4% $Zr^{4+}$ relative to iron (calculated from the stoichiometric reaction of oxide formation), resulting in the thin films ZrH1%, ZrH2%, ZrH3%, and ZrH4%, respectively. Five minutes after the addition of $Zr^{4+}$, at 25 °C, 1.50 mL of anhydrous ethanol (Synth, 99.8%) and 1.00 mL of isopropyl alcohol (Synth, 99.5%) were, in this order, slowly added to the solution, which was kept under stirring for ~ 15 min. A solution without addition of $Zr^{4+}$ was prepared following the same steps to obtain the pure hematite sample (H). All solutions were stored in a refrigerator (T= 7 °C) for 24 h and all thin film depositions were made at 25 °C with the precursor solutions subjected to stirring prior to deposition.

The final decrease in temperature promotes the accommodation of the polymeric chains, reducing intermolecular voids and improving packaging. This promotes the stabilization of the polymer and the viscosity of the solution, ensuring the reproducibility of the films subsequently manufactured.

On the commercial alumino borosilicate glass substrate (ABS, 1 mm thick), the FTO conductive layer ($SnO_2$:F, fluorine-doped tin oxide, resistivity of 8 ohm/cm) is deposited on the glass and allows to sustain relatively higher temperatures (~ 800 °C) for a short period of time without causing serious damage to the conductivity, transparency and structural integrity of the substrate. The glass composition and FTO thickness around 500 nm were chosen to strongly limit the diffusion of the element into the photocatalyst layer during heat treatment. The FTO substrates were cleaned by immersion in boiling water - Extran® solution for 30 minutes, immediately rinsed and kept for 15 minutes in hot water, followed by rinsing and immersion in ethanol and acetone for 15 minutes each. The substrates were subsequently heat-treated in air at 550 °C for 60 min. A single deposition (50 $\mu$L) of the precursor polymeric solution was deposited onto the FTO on the cleaned substrate and treated via spin coating with rotation of 5 s at 500 rpm and 30 s at 7000 rpm. After covering, the thin films were dried for 5 min at 90 °C on a hot plate, and treated for 30 min in air at 550 °C and for 30 min in $N_2$ at 750 °C. These chosen temperatures are well established in the literature to eliminate organic compounds and crystallize the hematite phase while preserving the substrate.

INTERFACE MORPHOLOGY AND CHARACTERIZATION

Morphological characteristics were investigated by scanning electron microscopy (SEM) using a Quanta™ FEG 650, FEI Company, in a transverse configuration (30°), with an ETD detector, a high accelerating voltage of 5-7 kV and a spot of 2.0. Working distances were kept between 7-10 mm and the horizontal field width was kept at 3.00 $\mu$m. Surface roughness was evaluated by atomic force microscopy (AFM), NX-10 Park Systems in intermittent contact mode (dynamic mode) with Nano World silicon probe, model FMR, Resonance frequency (nominal) 75 kHz, force constant (nominal) 2.8 N/m. The scanning image area of $2 \times 2$ micrometers with a resolution of $512 \times 512$ pixels was recorded. Average RMS values were determined with Gwyddion Software. Transmission electron microscopy (TEM) analysis was performed on a JEOL JEM 2100F equipped with energy dispersive spectroscopy (EDS), Oxford SDD X-Max 80 $mm^2$, and electron energy loss spectroscopy (EELS), Gatan GIF Tridiem 863. Both EDS and EELS data were acquired simultaneously using a probe size of 0.7 nm and an acquisition time of 0.1 s.

PHOTOELECTROCHEMICAL EXPERIMENTS

Pure and Zr-modified hematite thin films were tested as photoanodes for the water oxidation reaction in a three-electrode electrochemical cell, with a platinum electrode as the counter electrode, commercial Ag/AgCl(sat) (Metrohm Autolab) as the reference electrode and 1.0 mol $L^{-1}$ NaOH (pH 13.6) as the electrolyte solution. Linear scanning voltammogram (LSV) measurements were performed using a potentiostat/galvanostat (Autolab PGSTAT129N) and solar illumination (100 mW $cm^{-2}$) simulated by a 450 W Xe lamp (Osram, ozone-free) equipped with an AM 1.5 global filter with a scan rate of 10 mV $s^{-1}$. All potentials were converted to the reversible hydrogen electrode (RHE) using the Nernst equation (1):

$$E_{RHE} = E_{Ag/AgCl} + E^0_{Ag/AgCl} + 0.059\text{pH} \quad (1)$$

The photoelectron deposition of the FeNi cocatalyst on ZrH3% was carried out by immersing it in the electrochemical cell containing an aqueous solution (pH = 5.3) of 16.0 mmol/L $NiSO_4$ $6H_2O$ (Neon, 100%), 5.0 mmol/L $Fe_2(SO_4)_3$ $H_2O$ (Sigma Aldrich, 97%) and 0.1 mol/L $NaCH_3COO$ (Neon, 99.3%). A platinum wire and commercial (Metrohm Autolab) Ag/AgCl(sat) were used as counter and reference electrodes, respectively. LSV were performed three times on this system, from 0.5 to 0.9 V vs. Ag/AgCl using a scan rate of 10 mV $s^{-1}$. After this procedure, the FeNi coated ZrH3% thin film (ZrH3%/FeNi) was washed with water and no further treatment was employed.

ELECTROCHEMICAL IMPEDANCE SPECTROSCOPY EXPERIMENTS

Electrochemical impedance (EIS) measurements were performed using the same three-electrode configuration cells and electrolyte conditions (1.0 mol $L^{-1}$ NaOH (pH = 13.6). To extract important operational information, EIS data were analyzed using Mott-Schottky (M-S). Taking into account the morphology of the thin films and other assumptions reported for a correct application of the M-S theory, the charge donor density ($N_D$) for pure-H and ZrH samples were calculated from the M-S plots recorded at 1 kHz in the dark, relating the linear regime fit of the M-S plots and Eq. (2):

$$N_D = (2/e_0\varepsilon\varepsilon_0) \times (1/\text{slope}) \ (2)$$

where e 0 is the elementary charge of the electron ($1.60 \times 10^{-19}$ C), $\varepsilon$ is the dielectric constant of the semiconductor (80 for hematite), $\varepsilon_0$ is the permittivity of vacuum ($8.85 \times 10^{-12}$ F $m^{-1}$).

EXPERIMENTAL RESULTS

After spin coating deposition of the polymeric precursor solution and the heat treatment step, the obtained thin films were named as pure-H (hematite-H) and ZrH (x%) according to the Zr concentration (x = 1%, 2%, 3% and 4 mol%). The quality of FTO coverage and thin film morphology were monitored by scanning electron and atomic force microscopy (Figs. 1.1 and 1.2). A complete coverage of FTO (Fig. 1.1(a)) and good adhesion of the thin film can be observed in the Scanning Electron Microscopy (SEM) images for all compositions (Fig. 1.1). Apparently, no significant change in morphology is observed in SEM analysis after $Zr^{4+}$ addition, maintaining a typical elongated grain shape. However, the surface roughness decreases significantly with increasing $Zr^{4+}$ concentration in the precursor solution. From the Atomic Force Microscopy (AFM) topographical images (Fig. 1.2), the surface roughness values were estimated and summarized in Table 2, showing a substantial decrease from 26 for the FTO to 6.0 and 5.0 RMS for pure-H and ZrH (x%) thin films, respectively.

Table 1: Surface roughness estimated from AFM images for FTO, Pure-H and ZrH films

| Sample | RMS Roughness (Sq) (nm) |
|---|---|
| FTO | 25.93 |
| H | 6.13 |
| ZrH1% | 5.49 |
| ZrH2% | 3.77 |
| ZrH3% | 5.09 |
| ZrH3%/FeNi | 4.60 |

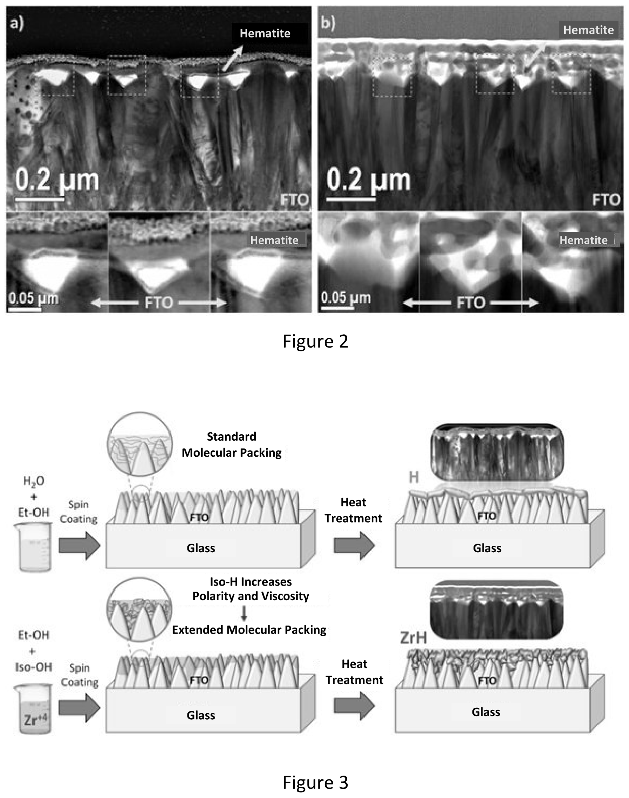

The projected cross-sectional view of hematite highlights a bottleneck of chemical processes (Fig. 2), which is associated with few regions of the oxide layer in contact with the irregular morphology of the FTO in the commercial substrate. In a previous paper by the inventors (DNF Muche, SA Carminati, AF Nogueira, FL Souza, Sol. Energy Mater. Sol. Cells,2020, 208, 110377), a solvent exchange during the final stage of precursor solution preparation allowed a monolayer deposition as shown in Fig. 2(a). Although this result allowed successful control of the film thickness from 15 to 130 nm in a single deposition, it was understood that contact between the photocatalyst monolayer and the FTO would not produce efficient charge transport. The evidence of poor interface is well represented by the magnified regions of the highlighted red squares in the Scanning Transmission Electron Microscopy (STEM) images (Fig. 2(a)).

The current strategy of the invention adopted a combination of an adequate proportion between solvents, such as ethanol/isopropanol and $Zr^{4+}$ concentration that allowed stable precursor solution, deposition of homogeneous thin films, favoring the formation of a new morphology that increased the contact interface that until then consisted of unfilled regions (voids). The red square regions highlighted in Fig. 2(b) (bottom STEM images) disclosed rich contact regions between the photocatalyst and FTO. STEM images of pure-H and ZrH thin films demonstrate the reduction in surface roughness discussed previously in Fig. 1.2, in which the layer grows by filling the FTO valleys until a smooth, relatively flat layer forms on top.

A plausible explanation for obtaining completely different thin film morphology, as previously disclosed, can be bounded to the specifics of the polymeric precursor solution preparation. Observing the schematic diagram in Fig. 1, the precursor polymeric solution is concentrated by reducing its initial volume to the consistency of a polymeric gel. Then, an optimized proportion of the solvent blend (such as ethanol/isopropanol) was used at 25 °C to solubilize the viscous polymeric gel. Thus, the solubilized polymeric gel may have assumed a different conformation favoring a more adequate molecular packing on the FTO surface during heat treatment, as illustrated in Fig. 3. Two factors lead to the new morphology observed, one related to the faster elimination of the polymeric solution and the other due to the addition of

$Zr^{4+}$. Indeed, the presence of $Zr^{4+}$ on the oxide surface induces an energy drop alleviating the competition between hematite grain growth and the stress at the FTO layer interface (Fig. 3, bottom) during heat treatment.

Higher resolution images at the photocatalyst-FTO interface were obtained in pure-H and ZrH thin films by high-resolution transmission electron microscopy (HRTEM). Representative images of the interfaces are displayed in Fig. 4 showing the HRTEM images for the interface region (white squares Figs. 4(a) and 4(f)) and its surroundings. Interplanar distances and lattice mismatch for FTO (SnO$_2$:F)/pure-H and FTO/ZrH at the interfaces (white squares in Figs. 4(b) and 4(g)) were calculated and summarized in Tables 1-4. The mismatch between the epitaxial growth plane of pure-H and ZrH on FTO was also measured by considering several similar interfaces. As a result, the average incompatibility for pure-H was (3.8 ± 1.6)% and for ZrH was (1.7 ± 0.9)%. The highest incompatibility for pure-H was 6.3%, as represented in Figs. 4(a)-(e), while for ZrH it was 3.8%. The results strongly indicate that the FTO-pure-H interfaces are subjected to stronger stresses during heat treatment, which may partially explain why hematite grows only on the top of the FTO crystal (Fig. 2(a) and Fig. 4(a)). Comparing the experimental FTO interplanar distances (not at the interface but within the surrounding area with the standard SnO$_2$, rutile P4$_2$/mnm structure (ICSD - 90611), the average mismatch corroborates showing larger distortion for pure-H (Table 3). Similarly, the average mismatch comparing experimental interplanar distances for hematite in the surroundings with the standard hematite ($\alpha$-Fe$_2$O$_3$, ICSD-7799, R3c) for both pure-H and ZrH shows distortion (Table 4 and Fig. 4) likely influenced by crystal growth on the rough FTO surface. The slightly greater incompatibility exhibited by ZrH may be related to the presence of $Zr^{4+}$. Here, the incompatibility evidenced by the HRTEM study at the FTO-photocatalyst interface was also discussed in the literature among several problems that impede high performance.

Table 2: Interplanar distances (dhkl) for Pure-H samples measured at seven FTO(SnO$_2$)/Pure-H interfaces from High Resolution Transmission Electron Microscopy (HRTEM) images. The $d_{hkl}$ were obtained for SnO$_2$ (ICSD-90611, rutile P42/mnm) and $\alpha$-Fe$_2$O$_3$ (ICSD-7799, hematite R3c). The interplanar mismatch for epitaxial growth of hematite on SnO$_2$ was calculated.

| Pure-H Samples | | | | | |
|---|---|---|---|---|---|
| HRTEM | SnO$_2$ | | Fe$_2$O$_3$ | | Incompatibility % |
| Interfaces | (hkl) | d(nm) | (hkl) | d(nm) | |
| 1 | -200 | 0.233 | -1-12 | 0.248 | 6.05% |
| 2 | 111 | 0.242 | 10-5 | 0.249 | 2.81% |
| 3 | -10-1 | 0.256 | -21-2 | 0.245 | 4.49% |
| 4 | 111 | 0.236 | -21-3 | 0.222 | 6.31% |
| 5 | 0-1-1 | 0.259 | -12-1 | 0.25 | 3.60% |
| 6 | 111 | 0.233 | -21-3 | 0.219 | 1.83% |
| 7 | 0-11 | 0.273 | 11-1 | 0.269 | 1.49% |
| | | | | Average | 3.80% |
| | | | | Std (+/-) | 1.56% |

Table 3: Interplanar distances (d$_{hkl}$) for ZrH samples measured at FTO(SnO$_2$)/ZrH interfaces from High Resolution Transmission Electron Microscopy (HRTEM) images. The d$_{hkl}$ was obtained for SnO$_2$ (ICSD-90611, rutile P42/mnm) and $\alpha$-Fe$_2$O$_3$ (ICSD-7799, hematite R3c). The interplanar mismatch for epitaxial growth of hematite on SnO$_2$ was calculated.

| Zr-H samples | | | | | |
|---|---|---|---|---|---|
| HRTEM | SnO$_2$ | | Sr-Fe$_2$O$_3$ | | Incompatibility % |
| Interfaces | (hkl) | d(nm) | (hkl) | d(nm) | |
| 1 | -100 | 0.464 | 003 | 0.447 | 3.80% |
| 2 | -200 | 0.236 | -213 | 0.238 | 0.84% |
| 3 | 020 | 0.233 | 2-1-3 | 0.225 | 3.56% |
| 4 | 01-1 | 0.262 | -114 | 0.268 | 2.24% |
| 5 | 010 | 0.462 | 003 | 0.461 | 0.22% |
| 6 | 002 | 0.171 | 221 | 0.171 | 0.47% |
| 7 | 010 | 0.475 | 00-3 | 0.471 | 0.85% |
| 8 | 120 | 0.212 | 021 | 0.215 | 1.40% |
| 9 | 020 | 0.242 | 2-2-2 | 0.238 | 1.68% |
| 10 | -1-10 | 0.341 | -10-3 | 0.335 | 1.79% |

(continued)

| Zr-H samples | | | | | |
|---|---|---|---|---|---|
| HRTEM Interfaces | $SnO_2$ (hkl) | d(nm) | $Sr\text{-}Fe_2O_3$ (hkl) | d(nm) | Incompatibility % |
| | | | | Average | 3.80% |
| | | | | Std (+/-) | 1.56% |

Table 4: Interplanar distances ($d_{hkl}$) for FTO(F:SnO$_2$) obtained from High Resolution Transmission Electron Microscopy (HRTEM) images. The $d_{hkl}$ was indexed to $SnO_2$ (ICSD-90611, rutile P42/mnm. The interplanar distortion was calculated by comparing experimental $d_{hkl}$ with standard $d_{hkl}$ for the rutile phase.

| Theoretical d (nm) | Pure SnO$_2$ Experimental d (nm) | Distortion (%) | Theoretical d (nm) | Doped SnO$_2$ Experimental d (nm) | Distortion (%) |
|---|---|---|---|---|---|
| 0.237 | 0.233 | 1.69% | 0.237 | 0.236 | 0.42% |
| 0.264 | 0.256 | 3.03% | 0.237 | 0.233 | 1.69% |
| 0.264 | 0.259 | 1.89% | 0.237 | 0.242 | 2.11% |
| 0.264 | 0.273 | 3.41% | 0.264 | 0.26 | 0.76% |
| | Average | 2.51% | | Average | 1.24% |
| | Std (+/-) | 0.71% | | Std (+/-) | 0.65% |

To further investigate the experimental implication of the developed approach to design efficient photoelectrodes, electrochemical experiments were conducted simulating half of a PEC cell. The J x V curves displayed in Fig. 5(a) show that the photocurrent response of the pure-H thin film (black solid line) gradually improves (from 0.53 mA cm$^{-2}$ to 1.23 $V_{RHE}$) with Zr$^{4+}$ addition, reaching the maximum efficiency with 3% Zr (ZrH3%, green solid line) at around 1.2 mA cm$^{-2}$ at 1.23 V RHE. Further addition of Zr$^{4+}$ led to a reduction in performance (> 0.9 mA cm$^{-2}$ at 1.23 $V$ RHE, orange solid line, Fig. 5(a)).

Concomitant with the improvement in performance, a slight anodic change in onset potential was observed comparing pure-H with ZrH thin films (from 0.88 to 0.95 V RHE). In the literature, the addition of elements such as Sn, Ti, and Sb that preferably segregate on hematite surfaces (e.g., surface exposed to the electrolyte) instead of doping are associated with the appearance of surface states and anodic shift of the observed reaction onset potential. Here, a similar behavior was attributed to the addition of Zr$^{4+}$. Typically, elements that tend to segregate onto the hematite crystal surface lead to three main distinct effects (1) pinning of grain growth by decreasing the surface energy at the grain borders, which also has a positive impact on charge transport through the hematite grain, (2) creating surface states on the liquid-exposed surface leading to changes in the position of the flat band potential, and (3) less commonly, effective doping of hematite by increasing the donor density ($N_D$). Since (1) and (2) were already attributed to the addition of Zr$^{4+}$ in the previous discussion, further investigations were carried out to probe the possible doping (3).

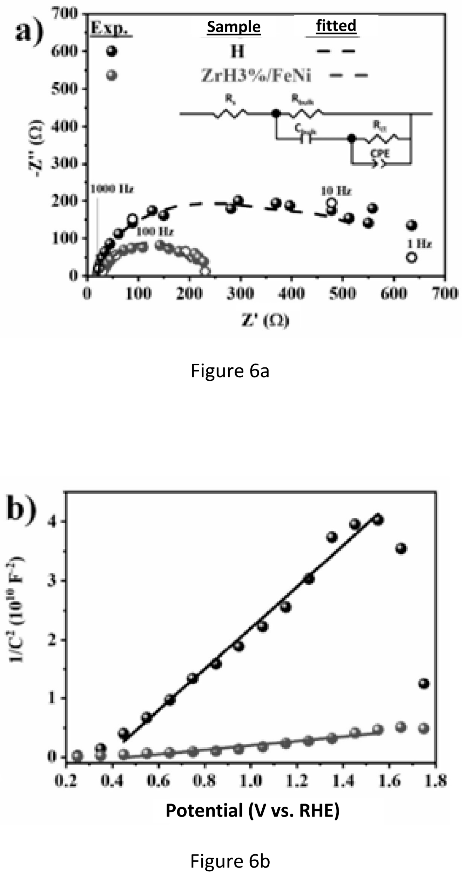

To clarify the interfacial charge separation as well as the transfer process, EIS and Photoelectrochemical Impedance Spectroscopy (pEIS) measurements were performed for all samples. The discussion focused on the HZr3%/FeNi photoelectrode that exhibits superior performance compared with Pure-H. As observed in the Nyquist plots (Fig. 6(a)), the pEIS spectra are composed of two blended depressed semicircles and suitably fitted with an equivalent circuit (Fig. 6(a), input) consisting of resistors and capacitors (electrolyte resistance ($R_S$), bulk resistance ($R_s$), bulk capacitance ($C_{bulk}$), the charge transfer resistance ($R_{ct}$) and a constant phase element (CPE) associated with the surface states capacitance ($C_{ss}$) that highlights the role of surface states and the bulk contribution in the photoelectrochemical process.

Table 5 summarizes the fitting parameters of $R_s$, $R_{bulk}$, $C_{bulk}$, $R_{ct}$, and CPE. It is noticeable that the ZrH3%/FeNi photoanode exhibited remarkably decreased resistances in both bulk (197.1 W) and charge transfer resistance (21.5 W) when compared with the H photoanode (540 and 361.9 W, respectively), confirming the minimization of electron losses due to Zr$^{4+}$ segregation and facilitated charge transfer at the interface between the ZrH3%/FeNi and the electrolyte.

Table 5: Fitting parameters derived from Photoelectrochemical Impedance Spectroscopy of H and ZrH3%/FeNi photoanodes at 1.23 V (V vs. RHE).

| photoanode | $R_s$ (W) | $R_{bulk}$ (W) | $C_{bulk}$ (F) | $R_{ss}$ (W) | $CPE_{SS}$ (F) |
|---|---|---|---|---|---|
| H | 20.04 | 540 | 1.86E-05 | 361.9 | 2.73E-05 |

(continued)

| photoanode | $R_s$ (W) | $R_{bulk}$ (W) | $C_{bulk}$ (F) | $R_{ss}$ (W) | $CPE_{SS}$ (F) |
|---|---|---|---|---|---|
| ZrH3%/FeNi | 14.01 | 197.1 | 2.11E-05 | 21.51 | 1.52E-05 |

Furthermore, the EIS data were analyzed in terms of Mott-Schottky plot to extract the $N_D$ values for all hematite thin films produced in the present investigation. The estimated values of $5.03 \times 10^{-19}$ cm$^{-3}$ for pure hematite and $2.39 \times 10^{-20}$ (ZrH1%), $4.60 \times 10^{-20}$ (ZrH2%) and $5.34 \times 10^{-20}$ cm$^{-3}$ (ZrH3%) demonstrate an effective Zr doping by enrichment of the charge donor density ($N_D$) of an order of magnitude (Eq. S(1) and Fig. 6(b)). Surprisingly, the developed approach favored a combination of these three effects improving the electronic properties ($N_D$) and leading to the formation of a new morphology (segregating at the grain boundary).

The overall efficiencies ($\eta_{overall}$) were determined for the thin films by normalizing the photocurrent response by the optical characteristics related to their microstructural parameter. $\eta_{overall}$ is obtained from the ratio $J_{ph}/J_{abs}$, where $J_{abs}$ represents the upper limit of the photocurrent density as a function of the absorbance efficiency of the electrode (see supporting information for more details). The estimated value of $J_{abs}$ was obtained from the integration of the UV-Vis spectrum of each photoelectrode (Fig. S3), representing the photocurrent in relation to its absorption properties, according to the literature. The dimensionless quantity ($\eta_{overall}$) confirms that the ZrH3% photoelectrode is almost three times more efficient than Pure-H and two times higher compared to other Zr concentration (Fig. 5(b)). Thus, sample ZrH3% was selected for further scrutiny and improvement.

A next step towards achieving even better efficiency would be to passivate the surface, which can be done by adding a cocatalyst on top of the surface to increase the injection of photogenerated holes through the electrolyte.

EXAMPLE OF INCORPORATION OF MODIFYING ELEMENT

Therefore, a FeNi cocatalyst was photo-electrodeposited on top of the ZrH3% surface. The adopted strategy led to a change to a lower onset potential (0.8 $V$ RHE) compared to all other electrodes, including pure hematite (Pure-H). This cathodic shift is a fingerprint of the surface state passivation by the addition of FeNi, which improves the overall photoelectrochemical performance $\eta$ without causing significant changes in the optical and microstructural properties. Characterization techniques were employed to gain an in-depth understanding of the role played by FeNi at the photocatalyst-electrolyte interface. It was demonstrated that most of the photogenerated holes in hematite migrate to the Ni atoms in the upper layer (being stored before promoting the water oxidation reaction). Including the performance of the ZrH3%/FeNi photoanode in the $\eta_{overall}$ of the graph (Fig. 5(b)), the overall efficiency increased by 7% compared to that of ZrH3%. The photocurrent values obtained here with thin film thicknesses around 100 nm were higher compared to other "planar" hematite photoanodes produced by similar methodologies as illustrated in Fig. 5(c). It is worth mentioning that the addition of Zr$^{4+}$ was not exclusive to the present work, as several reports in the literature also showed that zirconium has great potential to improve the performance of hematite, regardless of morphology and synthetic methods.

Further analyses were conducted to explore the morphological and physicochemical properties of ZrH3%/FeNi by combining - SEM/AFM and HRTEM/EELS/EDS.

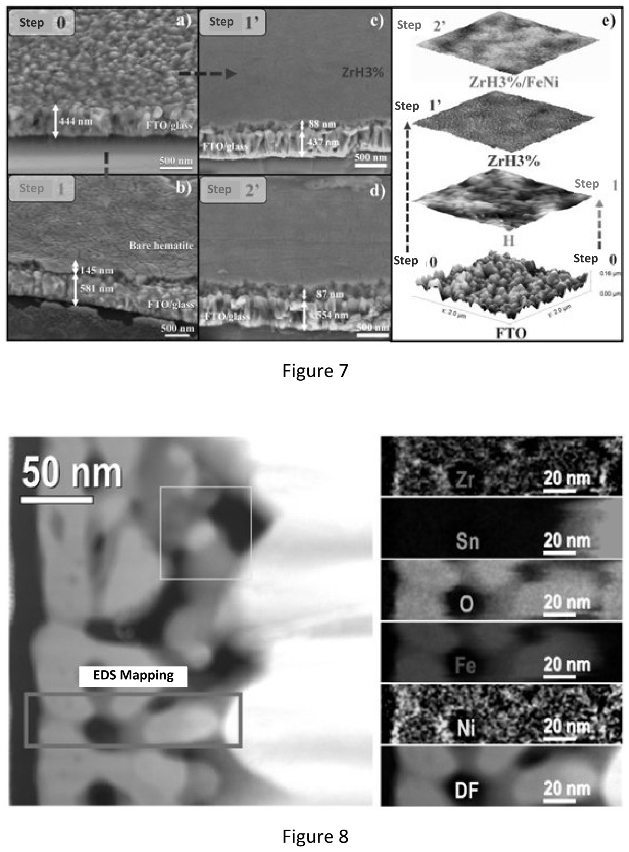

The SEM cross-section shown in Fig. 7 follows the fabrication step for Pure-H (a - b) and ZrH3%/FeNi (a - c - d) showing no apparent change in morphology. The addition of FeNi is expected not to change the morphology since no additional heat treatment is required. However, the surface roughness changes drastically from 26 (FTO) to 5 RMS (ZrH3%/FeNi), values even lower than pure hematite (Pure-H), forming a smooth surface. Indeed, after FeNi deposition, the rough topography of the FTO can no longer be observed (Fig. 7(e)).

The chemical composition of the ZrH3%/FeNi thin film was determined by EDS analysis during STEM image acquisitions. A representative region of the FTO-ZrH3%/FeNi interface (green box, Fig. 8) was analyzed and shows that the chemical composition discloses Sn-rich (green) in the FTO area, the photocatalyst hematite (red), Oxygen (blue) well distributed throughout all materials (oxide phases), Ni (yellow) scattered on the iron surface and Zr preferably segregated at the interface of hematite crystals (purple color, Fig. 8).

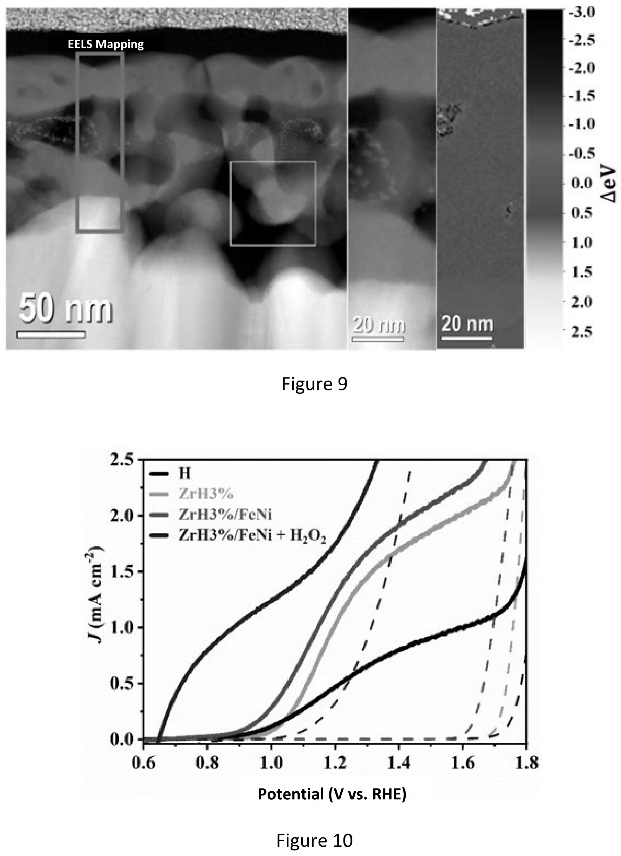

EELS analysis disclosed that the chemical environment of iron (hematite) changes around the FTO/Hematite interface and on top of the Hematite surface, as seen in Fig. 9. To better understand this process, an EELS color mapping showing the energy change of the Fe$^{+3}$ L$_{2,3}$ (DeV) edge pattern was plotted. Contrasting colors denote a variation in the chemical oxidation state or disturbance in chemical binding, due to the interactions of atoms with their adjacent ones, causing an energy shift in these areas. Among the two distinct contrasting regions, the first located at the FTO/Hematite interface (green region with blue-shift of energy and DeV of -0.5 eV) indicates that the epitaxial growth of hematite on FTO leads to the diffusion of tin of a few angstroms towards hematite. The second region, located on top of the hematite thin film surface (green to blue contrast color, DeV from -0.5 to -2.0 eV), shows the presence of iron content in the FeNi thin layer, which is disclosed by the Fe$^{+3}$ L$_{2,3}$ edge shift (blue region, DeV > -2.0 eV) originated from the Fe-Ni chemical binding. The preferential segregation of FeNi on top of the hematite surface was expected due to the deposition method adopted. The EELS color mapping result also corroborates what was concluded about the distribution of elements in the EDS analysis (Fig. 8), which showed that Zr cations do not diffuse significantly in the hematite bulk. The other two contrast regions are explained by the pores in the hematite thin film seen in the STEM image, i.e., the absence of iron in these two regions creates the color difference that does not contain meaningful information.

Here, data recorded from nano- to microscale clearly disclose that the interface between FTO and photocatalyst can be efficiently tuned and optimized simply by adjusting the chemistry of the precursor polymeric solution. Thus, the designed interface can avoid FTO exposure to the electrolyte, mitigating electron loss by means of recombination and/or competitive damaging reactions, as well as short circuit. Other experiments conducted on ZrH3%/FeNi photoanode in the presence of a typical hole collector such as hydrogen peroxide ($H_2O_2$) show that these interface-designed photoanodes can have even improved performance (1.9 mA cm$^{-2}$ and an even lower onset potential of 0.65 VRHE) as seen in Fig. 10.

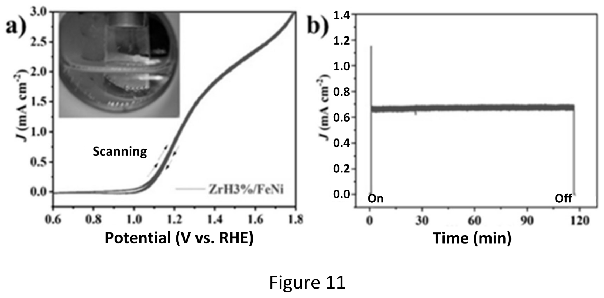

Furthermore, stability tests were conducted to investigate the quality of ZrH3%/FeNi under simulated operation condition (Fig. 11). Cyclic voltammetry measurements were performed for 200 cycles from 0.6 to 1.5 $V_{RHE}$ (scan rate 50 mV s$^{-1}$) under illuminated conditions (Fig. 11(a)). In all cycles, stable $J_{ph}$ and $V_{onset}$ were recorded, which discloses good stability of ZrH3%/FeNi in aqueous NaOH electrolyte under applied potential and 1 sun illumination. Chronoamperometry measurements (Fig. 11(b)) showed a peak when the light was on, indicating recombination processes at the solid-liquid interface, but the photocurrent density stabilized at 5 s and remained stable thereafter during a preliminary 2 h test.

The knowledge disclosed by the present invention is particularly useful for the production of new electrodes, solar cells, capacitors, electrochemical devices, photovoltaics and sensors. In addition, there is a wide range of areas in which oxide films can be applied, such as in the areas of telecommunications, mechanics, chemistry, optics, in different industries, whether as an integral part of systems against corrosion, oxidation, sensors, coatings on different surfaces, among others. Thus, solution chemistry-based strategy, originally developed to fabricate and design the interface contact between substrate and catalyst, is definitely not limited only to overcoming the current critical issues in photocatalysts and photovoltaic thin films grown, *e.g.* in FTO, but certainly can be easily extended to a more comprehensive industry of substrates like low-cost stainless steel and electronic-grade silicon wafers, *e.g.*, as well as other types of electrodes for a wide range of existing applications such as sensors, energy storage and conversion devices, and flexible electronics, given low-temperature synthesis fabrication.

Among the advantages of the process of the present invention is the possibility of preparing simple oxide (containing only one metal), complex oxide (two or more cations); matrix that allows the incorporation of dopant and/or modifiers, manipulating the placement in the oxide structure without altering its crystalline arrangement and without forming a second phase, so as to manipulate the physical-chemical properties of the surface/interfaces of the grains with the segregation of the modifiers.

The examples disclosed herein are intended to merely exemplify some of the numerous embodiments and use of the present invention, without limiting the interpretation of its scope and breadth, as well as, on possible alternative forms and configurational variations thereof that will be defined from the claims presented herein. It should be notice that, inspired by the growing global movement toward the development of low-carbon technologies, we chose a material as a key case study for the production of green hydrogen using sunlight and water. Iron oxide, specifically in the hematite phase, a mineral widely available in nature in this form, can be manipulated in a laboratory environment, enabling this promising technology. Despite five decades of intense scientific research, there have been significant advances in knowledge, but efficiency for commercial application has stagnated. The proposed approach seeks to optimize the material's intrinsic properties that previously limited its performance, focusing on improving electron mobility and electron transport to increase process efficiency.

## Claims

1. Process for producing oxide composition from polymeric solution containing one or more cations, **characterized in that** it comprises the following steps:

    I. dissolving a precursor of at least one metal cation of the oxide of interest and $\alpha$-hydroxycarboxylic acid in water;
    II. adding polyhydroxy alcohol under stirring and temperature between 60 °C and 70 °C and time between 20 min and 40 min;
    III. concentrating the formed composition;
    IV. diluting with at least two alcohols in a proportion between 4:1 and 2:3;
    V. cooling the composition at a temperature between 0 °C and 15 °C for at least 12 h.

2. Process, according to claim 1, **characterized in that** in step "V", the dilution is with a blend of ethanol and isopropyl alcohol in a proportion of 3:2.

3. Process, according to claim 1, **characterized in that** in step "VI" the composition is subjected to a temperature between 5 °C and 10 °C for at least 12 h.

4. Process, according to claim 1, **characterized in that** it comprises, after step I, the addition of more than one cation.

5. Process, according to claim 1, **characterized in that** it comprises, after step III, the incorporation of one or more modifying elements.

6. Oxide composition, **characterized in that** it is produced from a polymeric solution containing one or more oxides, according to any of the previous claims.

7. Process for thin film deposition on conductive layer substrate **characterized in that** it comprises the following steps:

   - deposing oxide composition, according to claim 6, on clean and treated substrates,
   - drying and heat treatment.

8. Process, according to claim 6, **characterized in that** the heat treatment occurs for a period of between 20-40 min in air at a temperature between 500 °C and 600 °C, followed by an additional 10-30-min in an inert atmosphere at a temperature between 700 °C and 800 °C.

9. Process, according to claim 7 or 8, **characterized in that** the substrate is at least one of common glass, stainless steel, silicon *wafers* , aluminum borosilicate glass, aluminum borosilicate glass coated with a conductive layer of fluorine-doped tin oxide (FTO).

Figure 1

Figure 1.1

Figure 1.2

Figure 2

Figure 3

Figure 4

Potential (V vs. RHE)

Figure 5a

Figure 5b

Figure 5c

Figure 6a

Figure 6b

Figure 7

Figure 8

Figure 9

Figure 10

Figure 11

Figure 12a

Figure 12b

Figure 12c

Figure 12d

Figure 13

Figure 14

Figure 15

## INTERNATIONAL SEARCH REPORT

| International application No. |
|---|
| **PCT/BR2024/050111** |

| **A.** | **CLASSIFICATION OF SUBJECT MATTER** |
|---|---|

**C08J 5/00**(2006.01)i; **B32B 18/00**(2006.01)i; **C23C 26/00**(2006.01)i; **H01L 21/00**(2006.01)i
CPC: C08J5/00; B32B18/00; C23C26/00; H01L21/02104

According to International Patent Classification (IPC) or to both national classification and IPC

| **B.** | **FIELDS SEARCHED** |
|---|---|

Minimum documentation searched (classification system followed by classification symbols)

C08J5/00; B32B18/00; C23C26/00; H01L21/00
CPC: C08J5/00; B32B18/00; C23C26/00; H01L21/02104

Documentation searched other than minimum documentation to the extent that such documents are included in the fields searched

Base de Dados do INPI-BR e Portal de Periódicos da CAPES

Electronic data base consulted during the international search (name of data base and, where practicable, search terms used)

STNext e Derwent Innovation/Clarivate

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 115386898 A (UNIV ANYANG NORMAL) 25 November 2022 (2022-11-25)<br>(translated document, pages 1-8) | 1-9 |
| Y | CN 115058723 A (UNIV YANGZHOU) 16 September 2022 (2022-09-16)<br>(translated document, pages 1-5) | 1-9 |
| Y | Karen C. Bedin, Andre L. M. Freitas, Aryane Tofanello, Ingrid Rodríguez-Gutiérrez, Flavio L. Souza, Revealing the synergy of Sn insertion in hematite for next-generation solar water splitting nanoceramics. International Journal of Ceramic Engineering & Science, Volume 2, Issue 5, September 2020, Pages 204-227, published by Wiley Periodicals, First published: 07 July 2020. https://doi.org/10.1002/ces2.10062 (Abstract, table 1, figures, pages 204-224) | 1-9 |
| Y | D. Chen, Z. Liu, Dual-Axial Gradient Doping (Zr and Sn) on Hematite for Promoting Charge Separation in Photoelectrochemical Water Splitting. ChemSusChem 2018, 11, 3438 https://doi.org/10.1002/cssc.201801614 (Abstract, Introduction, Experimental section, Results and discussion, figures and Conclusion, pages 3438-3448) | 1-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 May 2024** | **22 May 2024** |

| Name and mailing address of the ISA/BR | Authorized officer |
|---|---|
| **National Institute of Industrial Property (Brazil)**<br>**Rua Mayrink Veiga, 9, 6º andar, CEP 20.090-910 Rio de Janeiro – RJ**<br>**Brazil** | **Luis Carlos OLIVEIRA DA SILVA** |
| Telephone No. (55 21) 3037-3742, 3037-3984 | Telephone No. +55 21 3037 4528 - 3037 3319 |

Form PCT/ISA/210 (second sheet) (July 2022)

**INTERNATIONAL SEARCH REPORT**

| International application No. |
| --- |
| **PCT/BR2024/050111** |

### C. DOCUMENTS CONSIDERED TO BE RELEVANT

| Category* | Citation of document, with indication, where appropriate, of the relevant passages | Relevant to claim No. |
| --- | --- | --- |
| X | Dereck N.F. Muche, Thayna M.G. dos Santos, Gabriela P. Leite, Mauricio A. Melo, Renato V. Gonçalves, Flavio L. Souza, Tailoring hematite/FTO interfaces: New horizons for spin-coated hematite photoanodes targeting water splitting, Materials Letters, Volume 254, 2019, Pages 218-221. https://doi.org/10.1016/j.matlet.2019.07.068 (Abstract, Introduction, Experimental section, Results and discussion, figures, Conclusion and Supporting information, pages 218-221) | 1-9 |

Form PCT/ISA/210 (second sheet) (July 2022)

**INTERNATIONAL SEARCH REPORT**
Information on patent family members

International application No.

**PCT/BR2024/050111**

| Patent document cited in search report | | | Publication date (day/month/year) | Patent family member(s) | | | Publication date (day/month/year) |
|---|---|---|---|---|---|---|---|
| CN | 115386898 | A | 25 November 2022 | NONE | | | |
| CN | 115058723 | A | 16 September 2022 | CN | 115058723 | B | 25 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3330697 A
- CN 100515953
- US 3438723 A
- BR 102019025561
- DE 19546483
- US 4994433 A
- KR 102460587

**Non-patent literature cited in the description**

- **P. SHADABIPOUR** ; **TW HAMANN**. *Chem. Commun.*, 2020, vol. 56, 2570-2573